(19) Europäisches Patentamt
European Patent Office
Office européen des brevets

(11) **EP 1 674 510 B1**

(12) **EUROPEAN PATENT SPECIFICATION**

(45) Date of publication and mention
of the grant of the patent:
**12.08.2009   Bulletin 2009/33**

(51) Int Cl.:
*C08J 9/04* (2006.01)      *B29C 47/78* (2006.01)
*C08J 9/00* (2006.01)

(21) Application number: **04792200.0**

(22) Date of filing: **08.10.2004**

(86) International application number:
**PCT/JP2004/014931**

(87) International publication number:
**WO 2005/035639 (21.04.2005 Gazette 2005/16)**

(54) **ULTRAHIGH-MOLECULAR POLYETHYLENE FOAM AND PROCESS FOR PRODUCING THE SAME**

SCHAUMSTOFF AUS ULTRAHOCHMOLEKULAREM POLYETHYLEN UND HERSTELLUNGSVERFAHREN DAFÜR

MOUSSE POLYETHYLENE A POIDS MOLECULAIRE ULTRA-ELEVE ET SON PROCEDE DE PRODUCTION

(84) Designated Contracting States:
**DE FR GB IT NL**

(30) Priority:   **09.10.2003   JP 2003351309**

(43) Date of publication of application:
**28.06.2006   Bulletin 2006/26**

(73) Proprietor: **Mitsui Chemicals, Inc.
Tokyo 105-7117 (JP)**

(72) Inventors:
• **NISHIKAWA, Shigeo,
Mitsui Chemicals, Inc.
Sodegaura-shi, Chiba 2990265 (JP)**
• **ARIMOTO, Masashi,
Mitsui Chemicals, Inc.
Sodegaura-shi,
Chiba 2990265 (JP)**
• **ERIGUCHI, Michio,
Mitsui Chemicals, Inc.
Sodegaura-shi,
Chiba 2990265 (JP)**

(74) Representative: **Simons, Amanda Louise
J.A. Kemp & Co.,
14 South Square,
Gray's Inn
London WC1R 5JJ (GB)**

(56) References cited:
**EP-A- 1 605 000          JP-A- 8 504 856
JP-A- 11 335 480          JP-A- 54 112 970
JP-A- 2000 119 453**

• **"A NEW METHOD FOR PREPARATION OF LIGHTWEIGHT ULTRAHIGH MOLECULAR WEIGHT POLYETHYLENE (UHMWPE) FOAM" JOURNAL OF APPLIED POLYMER SCIENCE, JOHN WILEY AND SONS INC. NEW YORK, US, vol. 59, no. 9, 28 February 1996 (1996-02-28), pages 1489-1492, XP000550095 ISSN: 0021-8995**

**Description**

**Technical Field**

The present invention relates to an expanded ultra-high-molecular-weight polyethylene product and a process for preparation thereof.

**Background Art**

Ultra-high-molecular-weight polyethylene having a viscosity average molecular weight of 300,000 or more has, among many plastic materials, excellent abrasion resistance, self-lubrication, impact strength, cryogenic properties, chemical resistance and the like, and this polymer having the aforementioned features is being utilized in various applications such as construction members, medical devices, food-related and sports/leisure-related applications and the like.

In recent years, there has been an increasing demand for such ultra-high-molecular-weight polyethylene to have, in addition to their unique features, new additional functions such as light weight, thermal insulating property, sound absorption, low dielectric constant, impact absorption, flexibility and the like. As a method for imparting such functions to the polymer, expansion molding may be mentioned. However, since the ultra-high-molecular-weight polyethylene has a molecular weight of more than 300,000, its melt viscosity is high, while its fluidity is very low, and thus it being somewhat difficult to be processed by molding. In particular, it has been known that since it is hard to control the melt viscosity in expansion molding, this technique is very difficult to be applied to the above polymer. The reasons for this may be mentioned as that: (i) owing to the difficulty in molding as mentioned above, the continuous stable productivity has not been established, (ii) when expansion molding is carried out in the conventional manner, the properties referred to as mechanical strength, including abrasion resistance, self-lubrication and impact strength, which are inherent features of the ultra-high-molecular-weight polyethylene, are significantly deteriorated, and the like. Thus, at present, this polymer is practically not marketed as an actual product.

In the publications of Patent Documents 1 to 3, disclosed is a technology of obtaining an expanded product by supplying carbon dioxide as a blowing agent to the solid conveyance part and/or the liquid conveyance part in an extruder. However, since special facilities such as pressure-resistant seal or the like are required for the screw shaft or the hopper for feeding of raw materials in order to supply carbon dioxide to the solid conveyance part, the apparatus will become complicated from an industrial perspective, while at the same time, there will be difficulties in continuous productivity in the aspect of the raw material supply. Further, there is also disclosed a method for expansion molding of ultra-high-molecular-weight polyethylene using a rod-type die and a tubular-type die. However, despite that the specifications of the extruder, the conditions for extrusion, ultra-high-molecular-weight polyethylene as the raw material or the like are described to be virtually the same in these patent documents, and furthermore the resin temperatures immediately after discharge from the die as described are virtually the same throughout the documents, the expansion ratios and the average cell diameters vary in large extents. Therefore, there is a problem that an expanded product with the desired expansion ratio and the average cell diameter cannot be obtained stably based only on those conditions.

In addition, the two stage extruder screw as described in the publications of Patent Document 1 or 2, which has been generally used in extrusion expansion molding in prior art, has problems that the compression zone is short, and the pressure in the extruder is subject to fluctuation, thus it being impossible to extrude the expanded ultra-high-molecular-weight polyethylene product stably.

Moreover, when molding of an expanded ultra-high-molecular-weight polyethylene product is carried out with a die conventionally used, the expanded product obtained has defective appearance on the surface. This is caused by the marks generated by screw flight of the extruder (flight marks), and since the bubbles generated in the vicinity of the die outlet are concentrated in the flight mark areas, these flight marks become highly visible, thus resulting in defective appearance. Since this phenomenon causes, in regard to the expanded product as a whole, partial disappearance of the skin layer and impaired uniformity in the bubbles (cells), the proportion of closed cells also decreases. That is, there is a problem that the excellent properties of ultra-high-molecular-weight polyethylene are deteriorated. Especially, there is a problem that the property of impact resistance is deteriorated significantly.

Patent Document 1: Publication of JP-A-11-116721
Patent Document 2: Publication of JP-A-11-335480
Patent Document 3: Publication of JP-A-2000-119453

## Disclosure of Invention

### Problems to be Solved by the Invention

Accordingly, it is an object of the present invention to provide an expanded ultra-high-molecular-weight polyethylene product which has good external appearance and to which the functions such as light weight, thermal insulating property, sound absorption, low dielectric constant, impact absorptions, and flexibility have been imparted without impairing the features inherent to the polymer, such as excellent abrasion resistance, self-lubrication, impact strength, cryogenic properties, and chemical resistance; and a process for preparing the expanded product stably and continuously.

### Means for Solving the Problems

The inventors conducted an extensive research in order to achieve the above-mentioned object, and found that (i) it is possible to obtain an expanded ultra-high-molecular-weight polyethylene product which has good external appearance and good mechanical properties, in particular the property of impact resistance, by setting respectively the residence time taken by an ultra-high-molecular-weight polyethylene resin having a blowing agent dissolved therein to pass from the front end of screw to the die outlet of an extruder, and the resin pressure at the front end of screw, to fall in specific ranges, thereby reducing the marks of screw flight (flight marks); and (ii) it is possible to obtain an expansion molded article which has been highly expanded and which has a thick skin layer and the good mechanical properties, by controlling respectively the temperature at the resin surface and the temperature at the central part of resin immediately after discharge from die to fall in specific ranges. Thus, they completed the invention.

Therefore, the present invention provides the followings.

(1) An expanded ultra-high-molecular-weight polyethylene product, which is obtainable by expanding ultra-high-molecular-weight polyethylene having a viscosity average molecular weight of from 300,000 to 10,000,000, wherein the density of the expanded product is from 0.02 to 0.7 g/cm$^3$, and the value of the tensile-impact strength X (kJ/m$^2$) at a temperature of -40°C is represented by the following Equation (1) which is approximated from the density $\rho$ (g/cm$^3$) of the expanded ultra-high-molecular-weight polyethylene product:

$$\text{X} = \text{A} \times \rho \qquad\qquad\qquad (1)$$

wherein the coefficient A is between 75 and 1,500 inclusive.

(2) The expanded ultra-high-molecular-weight polyethylene product according to (1), wherein the tensile strength Y (MPa) of the expanded ultra-high-molecular-weight polyethylene product at a temperature of -150°C is represented by the following Equation (2) which is approximated from the density $\rho$ (g/cm$^3$) of the expanded ultra-high-molecular-weight polyethylene product:

$$\text{Y} = \text{B} \times \rho \qquad\qquad\qquad (2)$$

wherein the coefficient B is between 50 and 1,000 inclusive.

(3) A process for the preparation of an expanded ultra-high-molecular-weight polyethylene product having a density of from 0.02 to 0.7 g/cm$^3$, which process comprises expanding ultra-high-molecular-weight polyethylene having a viscosity average molecular weight of from 300,000 to 10,000,000, wherein the residence time T (minutes) taken for the ultra-high-molecular-weight polyethylene having a blowing agent dissolved therein to pass from the front end of a screw to the die outlet of an extruder is represented by the following Equation (3) which is approximated from the viscosity average molecular weight Mv of the ultra-high-molecular-weight polyethylene:

$$T = E \times (Mv \times 10^{-6})^2 \qquad\qquad (3)$$

wherein the coefficient E is between 0.5 and 10 inclusive, and the resin pressure at the front of a screw is from 10 to 100 MP a .

(4) The process according to (3), wherein the process comprises the steps of melting ultra-high-molecular-weight polyethylene in an extruder; adding a blowing agent to the ultra-high-molecular-weight polyethylene; and expanding the resin by extrusion such that the temperature at the resin surface immediately after discharge from the die is from 60 to 140˚C, and the temperature at the central part of the resin immediately after discharge from the die is from 70 to 150˚C.

(5) The process according to (3) or (4), wherein carbon dioxide is added as the blowing agent in an amount of from 0.1 to 20 parts by weight per 100 parts by weight of the ultra-high-molecular-weight polyethylene.

(6) A heat insulator made of the expanded ultra-high-molecular-weight polyethylene product according to (1) or (2), which has a thermal conductivity of from 0.01 to 0.35 Kcal/m·hr·˚C.

(7) A heat insulator for liquefied natural gas and a heat insulator for liquid hydrogen made of the expanded ultra-high-molecular-weight polyethylene product according to (1) or (2), which has a thermal conductivity of from 0.01 to 0.35 Kcal/m·hr·˚C.

(8) A constituent material for a superconductive magnetic resonance imaging system, a lightweight high-performance sliding material, and an impact-absorbing high-performance sliding material, which is the expanded ultra-high-molecular-weight polyethylene product according to (1) or (2) .

## Effects of the Invention

When the expanded ultra-high-molecular-weight , polyethylene product of the present invention is used, it becomes possible to provide an expanded product which has good external appearance and to which the functions such as light weight, thermal insulating property, sound absorption, low dielectric constant, impact absorption, and flexibility have been added without impairing the features inherent to ultra-high-molecular-weight polyethylene, such as excellent abrasion resistance, self-lubrication, impact strength, cryogenic properties, or chemical resistance.

Further, according to the process for preparation of the expanded ultra-high-molecular-weight polyethylene product of the present invention, it is possible to prepare an expanded product stably, and also to prepare a highly expanded ultra-high-molecular-weight polyethylene product having a skin layer, which has good external appearance due to reduced marks of screw flight, and at the same time excellent mechanical properties.

## Brief Description of the Drawings

Fig. 1 is a schematic diagram representing an illustration of the process for preparation of an expanded ultra-high-molecular-weight polyethylene product.

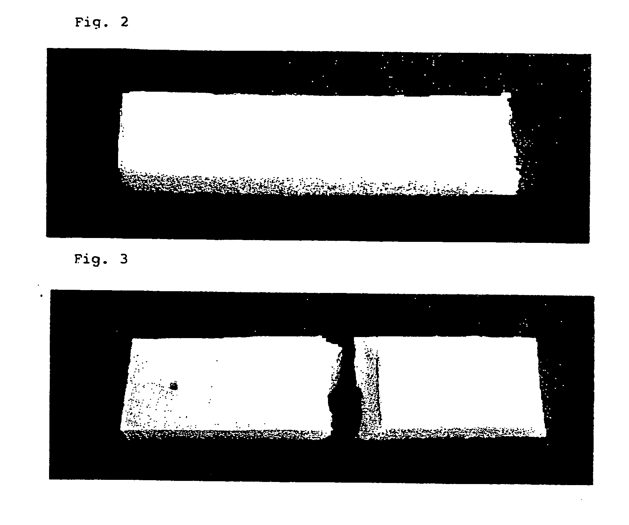

Fig. 2 is a photograph of the specimen from Example 6 after the DuPont impact strength test.

Fig. 3 is a photograph of the specimen from Comparative Example 10 after the DuPont impact strength test.

## Best Mode for Carrying Out the Invention

[Ultra-high-molecular-weight polyethylene]

The ultra-high-molecular-weight polyethylene used in the present invention is one composed of ethylene as the main component (in the largest molar percentage of the entire copolymer components) and may be exemplified by homopolymers of ethylene, copolymers having ethylene as the main component and other monomers copolymerizable with ethylene. As the monomer copolymerizable with the ethylene, for example, α-olefins having 3 or more carbon atoms may be mentioned. This α-olefin having 3 or more carbon atoms may be exemplified by propylene, 1-butene, isobutene, 1-pentene, 2-methyl-1-butene, 3-methyl-1-butene, 1-hexene, 3-methyl-1-pentene, 4-methyl-1-pentene, 1-heptene, 1-octene, 1-decene, 1-dodecene, 1-tetradecene, 1-hexadecene, 1-octadecene, or 1-icosene .

Among these, homopolymers of ethylene or copolymers of ethylene as the main component with the above-mentioned α-olefins are very suitably used in view of economic efficiency, and preferred are those having 80 mol% or more, preferably 90 mol% or more, and even more preferably 95 mol% or more of ethylene with respect to the whole polymer.

For the ultra-high-molecular-weight polyethylene used in the invention, preferred are those having a viscosity average molecular weight of 300,000 to 10,000,000, preferably of 900,000 to 8,000,000, more preferably of 1,900,000 to 8,000,000, even more preferably 2,100,000 to 8,000,000, particularly 2,600,000 to 8,000,000, and especially 3,000,000 to 6,000,000. When the viscosity average molecular weight is within the ranges described above, properties such as abrasion resistance, self-lubrication, impact strength, cryogenic properties, and chemical resistance can be obtained at their best. Also, two or more kinds of ultra-high-molecular-weight polyethylenes having different viscosity average molecular weights which are within the above ranges may be used in combination.

The ultra-high-molecular-weight polyolefin resin used in the invention can be prepared by a conventionally known method, for example, by a method of polymerizing ethylene or an $\alpha$-olefin in the presence of a catalyst, as described in the publication of JP-A-58-83006.

Further, within the scope of not deteriorating the object of the invention, various polymers known in the art may be also added. For example, mention may be made of polyolefins (polyethylene having a viscosity average molecular weight of less than 300,000, polypropylene having a viscosity average molecular weight of 300,000 to 10,000,000, polypropylene having a viscosity average molecular weight of less than 300,000, an ethylene-propylene copolymer, polybutene, or 4-methylpentene-1 ); elastomers; styrene-based resins (polystyrene, a butadiene-styrene copolymer, an acrylonitrile-styrene copolymer, or an acrylonitrile-butadiene-styrene copolymer ; polyesters (polyethylene terephthalate, polybutylene terephthalate, polylactic acid or the like); polyvinyl chloride, polycarbonate, polyacetal, polyphenylene oxide, polyvinyl alcohol, polymethyl methacrylate, polyamide-based resins, polyimide-based resins, fluorine-based resins, and liquid crystal polymers.

[Preparation of expanded ultra-high-molecular-weight polyethylene product]

[Blowing agent]

For the blowing agent used in the present invention, specifically as the chemical blowing agent, mention may be made of sodium hydrogen carbonate, ammonium carbonate, ammonium hydrogen carbonate, ammonium nitrite, citric acid, azodicarbonamide, azobisisobutyronitrile, benzenesulfonyl hydrazide, barium azodicarboxylate, dinitrosopentamethylene tetramine, P,P'-oxybisbenzenesulfonyl hydrazide, P-toluenesulfonyl hydrazide, or P-toluenesulfonyl acetone hydrazone .

Also, as the physical blowing agent, mention may be made of hydrocarbons such as propane, butane, pentane, isobutane, neopentane, isopentane, hexane, ethane, heptane, ethylene, propylene, or petroleum ether ; alcohols such as methanol or ethanol ; halogenated hydrocarbons such as methyl chloride, methylene chloride, dichlorofluoromethane, chlorotrifluoromethane, dichlorodifluoromethane, chlorodifluoromethane, or trichlorofluoromethane ; carbon dioxide, nitrogen, argon, or water. Such blowing agent may be used alone or in combination of two or more. Also, among these blowing agents, carbon dioxide is most preferred.

Unlike other physical blowing agents such as butane gas, carbon dioxide is free from the danger of explosion, or toxicity ; unlike the Freon-based gases such as dichlorodifluoromethane, it does not cause environmental problems such as destruction of the ozone layer; and unlike the chemical blowing agents, it does not generate any product residue. Further, it is believed that carbon dioxide enters a supercritical state in the extruder, thereby its compatibility with ultra-high-molecular-weight polyethylene being improved, and that the plasticizing effect leads to lowering of the melt viscosity, thereby molding being significantly facilitated.

[Process for molding the expanded product]

For the process for molding the expanded product of the invention, extrusion expansion is preferred from the viewpoint that continuous molding is possible and the production costs are low. As the type of the extruder used in the invention, for example, a single screw extruder, or a twin screw extruder may be mentioned. Among these, a single screw extruder is preferred. A multi-stage extruder in which two or more extruders are connected in sequence may be also used.

In the case of using a physical blowing agent, the configuration of the extruder screw is appropriately such that melting of the ultra-high-molecular-weight takes place before the supplying section for the physical blowing agent, thus it being possible to secure sufficient length in the compression zone. Further, a full-flight type is preferred in which the channel depth gradually decreases to become constant at the front end metering section, since the fluctuation in the resin pressure inside the extruder is small, and the expanded product can be extruded stably.

Further, according to the invention, the position for addition of the physical blowing agent to the extruder needs to be a position where the ultra-high-molecular-weight polyethylene composition has been already melted, and thus the physical blowing agent can be supplied stably. The position for addition is preferably at the adaptor section between the extruder and the die, especially at the position of the metering section of screw. Also, in the case of using a multi-stage extruder in which two or more extruders are connected, the physical blowing agent may be supplied at the connection tube between an extruder and another extruder.

For the method of supplying carbon dioxide used according to the invention, mention may be made, for example, of a method of supplying carbon dioxide in the gaseous state by controlling the pressure of the supplying section at the carbon dioxide cylinder by means of a pressure reducing valve or a method of supplying carbon dioxide in the liquid state or in the supercritical state by controlling the flow rate of carbon dioxide from the carbon dioxide cylinder by means of a metering pump. Among these, the method of supplying carbon dioxide in the supercritical state is preferred. The amount of addition for carbon dioxide is preferably from 0.1 to 20 parts by weight, preferably from 0.3 to 15 parts by weight, even from 0.4 to 9 parts by weight per 100 parts by weight of ultra-high-molecular-weight polyethylene. With 0.1 part by weight or more of carbon dioxide per 100 parts by weight of ultra-high-molecular-weight polyethylene, the expansion ratio increases, and thus formability is improved. Further, with 20 parts by weight or less of carbon dioxide per 100 parts by weight of ultra-high-molecular-weight polyethylene, reduction in the expansion ratio due to cell breakage is small, and the pressure fluctuation is small, thus, uniformity of cells and extrusion stability preferably becoming good.

In addition, the inventors discovered that the residence time T (minutes) taken by ultra-high-molecular-weight polyethylene having a blowing agent dissolved therein, to pass from the front end of screw to the die outlet of the extruder, and the resin pressure at the front end of screw have critical effects on the external appearance and in particular, on the mechanical properties at low temperatures of the expanded product.

As compared with a general thermoplastic resin, ultra-high-molecular-weight polyethylene is susceptible to having the marks of screw flight (flight marks), on the molded articles. This becomes noticeable as the molecular weight increases. In the conventional extrusion molding having expansion not associated therewith, these flight marks are not as visible as such and do not become such serious problems. However, in the case of expansion molding, since the bubbles generated in the vicinity of the die outlet are concentrated at the sites of these flight marks, the flight marks on the articles of the expanded product become conspicuous and deteriorate the external appearance. Moreover, since the skin layer disappears in the areas of the flight marks, there is a problem that various mechanical properties, especially impact strength, are deteriorated.

Surprisingly, it was found in the present invention that if an ultra-high-molecular-weight polyethylene composition having a blowing agent dissolved therein maintains a specific time as well as a specific pressure even after passing through the front end of the extruder screw, it is possible to obtain an expanded ultra-high-molecular-weight polyethylene product which is excellent in various mechanical properties while having no flight marks, and that the residence time depends on the viscosity average molecular weight of ultra-high-molecular-weight polyethylene.

That is to say, in the following Equation (3) in which the residence time T (minutes) taken by ultra-high-molecular-weight polyethylene having a blowing agent dissolved therein, to pass from the front end of the extruder screw to the die outlet, is approximated from the viscosity average molecular weight of the ultra-high-molecular-weight polyethylene Mv, when the coefficient E is between 0.5 and 10 inclusive, preferably between 0.5 and 8 inclusive, and more preferably between 0.5 and 5 inclusive, while the resin pressure at the front end of screw is from 10 to 100 MPa, preferably from 10 to 50 MPa, and more preferably from 15 to 30 MPa, an expanded product having good external appearance with no flight marks can be obtained stably, without impairing the properties such as abrasion resistance, self-lubrication, impact strength, and chemical resistance of the ultra-high-molecular-weight polyethylene.

$$T = E \times (Mv \times 10^{-6})^2 \qquad\qquad (3)$$

The residence time T (minutes) taken by ultra-high-molecular-weight polyethylene having a blowing agent dissolved therein to pass from the front end of screw to the die outlet of an extruder can be calculated from the volume of the resin flow path from the front end of screw to the die outlet, the output rate and the melt density determined from the PVT (pressure, volume and temperature) relationship of the ultra-high-molecular-weight polyethylene resin.

Furthermore, the necessary residence time T (minutes) can be secured by enlarging the volume of the resin flow path in the die, or the volume of the resin flow path in the adaptor which connects the extruder and the die. It is also possible to secure said T by reducing the output rate; however, in order to obtain an expanded ultra-high-molecular-weight polyethylene product without lowering the throughput flow, it is preferable to increase the volume of the resin flow path.

In addition, the pressure at the front end of screw can be secured by increasing the resin flow path in the adaptor which connects the extruder and the die and by increasing the output rate. Here, it is important to maintain the state in which a specific time and a specific pressure are retained.

Moreover, the inventors found that in order to obtain an expanded ultra-high-molecular-weight polyethylene product which can be obtained with a stable expansion ratio and an average cell diameter, and whose skin layer is from 0.2 to 3 mm thick, it is important to control the temperature at the resin surface immediately after discharge from die and the temperature at the center of the resin immediately after discharge from die. The temperature at the resin surface immediately after discharge from die is preferably from 60 to 140˚C, more preferably from 70 to 140˚C, and even more preferably from 80 to 140˚C. If the temperature at the resin surface immediately after discharge from die is 140˚C or lower, the skin layer of the resulting expanded product becomes 0.2 mm or more in thickness, and the properties such as abrasion resistance, self-lubrication, impact strength, and chemical resistance are good. If the temperature at the resin surface immediately after discharge from die is 60˚C or higher, the thickness of the skin layer becomes 3 mm or less, resulting in that the expansion ratio is not reduced, there is no pressure elevation at the die section to the extent that molding becomes difficult, and functions expected from an expanded product such as light weight, thermal insulating property, sound absorption, low dielectric constant, impact absorption, or flexibility can be sufficiently exhibited. Here, the aforementioned temperature at the resin surface immediately after discharge from die is the value of the surface temperature of an expanded ultra-high-molecular-weight polyethylene product as measured using a non-contact type radiation thermometer at a location between 0 mm and 10 mm after discharge from die, at an extrusion velocity that is usually employed in extrusion molding of ultra-high-molecular-weight polyethylene. In addition, the temperature at the central part of the resin immediately after discharge from die is preferably from 70 to 150˚C, more preferably from 80 to 140˚C, and even more preferably 90 to 140˚C. When the central part temperature of the resin immediately after discharge from die is 150˚C or lower, it is possible to obtain sufficient resin viscosity and therefore to obtain an expanded product with high expansion ratio. Also, it is not likely that large cavities are formed inside the expanded product. Further, when the temperature at the central part of the resin immediately after discharge from the die is 70˚C or higher, the resin pressure does not undergo excessive elevation, and thus molding becomes easy. Here, the aforementioned temperature at the central part of the resin immediately after discharge from the die is the value of the temperature at the central part of an expanded ultra-high-molecular-weight polyethylene product as measured using a thermometer having a needle-type sensor, the needle-shaped sensor of which is penetrated into the resin central part repeatedly over several times until the measured temperature becomes stabilized, at a location between 0 mm and 10 mm after discharge from die, at an extrusion velocity that is usually employed in extrusion molding of the ultra-high-molecular-weight polyethylene.

As the method of controlling the temperatures at the surface and the central part of the resin immediately after discharge from die according to the invention, mention may be made, for example, of a method of controlling the temperature at the central part of the resin immediately after discharge from die by controlling the temperatures at the extruder cylinder, the adaptor, or the die, and of controlling the temperature at the surface of the resin immediately after discharge from die by locally cooling the part closest to the die outlet. By locally cooling the part closest to the die outlet, the temperature of the resin surface immediately after discharge from die is decreased, and thus a skin layer is formed at the surface of the molded article, thus resulting in facilitated maintenance of properties such as abrasion resistance, self-lubrication, impact strength, or chemical resistance and facilitated improvement of the external appearance (glossiness).

In addition, as the method of cooling as used in temperature control of the invention, mention may be made of a method of passing a cooling medium, or a method of air cooling. For example, the cooling medium usually used is water, but conventionally known cooling media such as machine oils, silicone oils, and ethylene glycol may be also used. Further, in the case of air cooling, use can be made of air at room temperature or cooled air.

According to the invention, a pigment, a dye, a lubricant, an anti-oxidant, a filler, a stabilizer, a flame-retardant, an antistatic agent, an ultraviolet absorber, a cross-linking agent, an anti-fungus agent, a crystal nucleating agent, an anti-shrinking agent, or an expansion nucleating agent may be added, if desired, within the scope of not deteriorating the object to be achieved. Among these, in particular, it is preferred to add a lubricant and an expansion nucleating agent.

By adding a lubricant, an effect of suppressing the elevation of pressure, which is the biggest problem during the process of molding ultra-high-molecular-weight polyethylene, may be obtained, thus resulting in stable production of an expanded product with excellent uniformity of cells. Further, the effect of preventing deterioration of the resin due to excessive shear heat generation in the extruder can be also expected.

The amount of addition of a lubricant is preferably from 0.01 to 5 parts by weight, more preferably from 0.03 to 3 parts by weight, and even more preferably from 0.05 to 2 parts by weight, per 100 parts by weight of ultra-high-molecular-weight polyethylene. If the lubricant is contained in an amount within the ranges described above, steep rises of the pressure in the extruder are suppressed, and thus the problem of poor quality expansion resulting from insufficient kneading of the resin and insufficient pressure can be solved.

The lubricant used in the invention may be those known in the art for blending with resins that are in general widely recognized. As the lubricant, use can be made of at least one selected from the group consisting of fatty acid amide, mineral oil, metal soaps, esters, calcium carbonates and silicates. They may be used alone or in combination of two or more kinds. However, metal salts of fatty acids are particularly preferred, and inter alia, calcium stearate is most preferred.

The effect of using an expansion nucleating agent may be mentioned as making the cell diameter small as well as uniform. The amount of addition of the expansion nucleating agent is preferably from 0.001 to 3 parts by weight, more preferably from 0.001 to 0.5 part by weight, even more preferably from 0.01 to 0.2 part by weight, and still more preferably from 0.03 to 0.1 part by weight, per 100 parts by weight of ultra-high-molecular-weight polyethylene. If the expansion nucleating agent is contained in an amount within the ranges described above, it becomes easier to obtain an expanded product having small and uniform cell diameter.

As the expansion nucleating agent used in the invention, mention may be made of, for example, one or a combination of several kinds selected from calcium carbonate, clay, talc, silica, magnesium oxide, zinc oxide, carbon black, silicon dioxide, titanium oxide, plastic microspheres, ortho-boric acid, alkali earth metal salts of fatty acids, citric acid, and sodium hydrogen carbonate (sodium bicarbonate) . Among these, a combination of citric acid and sodium hydrogen carbonate (sodium bicarbonate) is particularly preferred.

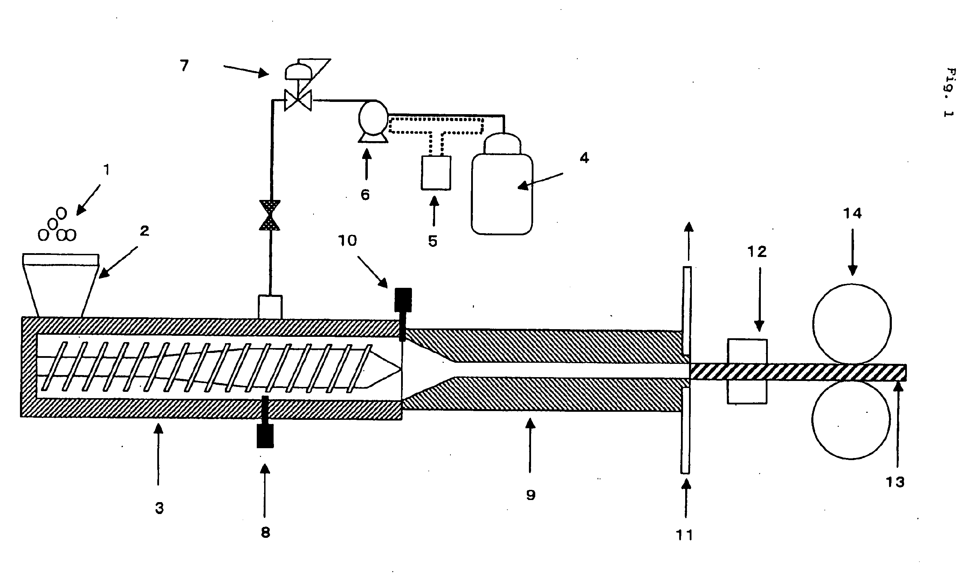

Next, one embodiment of molding the expanded ultra-high-molecular-weight polyethylene product of the invention will be described below with reference to Fig. 1.

An ultra-high-molecular-weight polyethylene composition 1, which has been obtained by mixing ultra-high-molecular-weight polyethylene with predetermined amounts of a lubricant and an expansion nucleating agent, as desired, by means of a tumbler blender or a Henschel mixer, is introduced to a hopper 2 and is melted by kneading with heating in an extruder 3. For the method of supplying carbon dioxide, carbon dioxide from a liquid carbon dioxide cylinder 4 is charged, as maintained in the liquid state, into a metering pump 6, and the pressure is increased. Here, it is preferable to subject the line connecting the cylinder and the metering pump to cooling by means of a cooling medium circulator 5.

Next, mention may be made of a method of supplying carbon dioxide to melted ultra-high-molecular-weight polyethylene, in which carbon dioxide is discharged after the discharge pressure of the metering pump 6 is adjusted to a constant pressure in the range of from the critical pressure of carbon dioxide (7.4 MPa) to 100 MPa, by means of a pressure control valve 7. Here, the carbon dioxide supplied to the melted ultra-high-molecular-weight polyethylene may be in either of the gaseous state, the liquid state or the supercritical state, but from the viewpoint of stable supply, supplying in the supercritical state is preferred. The pressure of the supplied resin 8 is preferably from 3 to 100 MPa, more preferably from 8 to 80 MPa, even more preferably from 15 to 60 MPa, and still more preferably from 20 to 40 MPa. When the pressure of the supplied resin is 3 MPa or more, the solubility of carbon dioxide in the melted ultra-high-molecular-weight polyethylene composition is high, and thus an expanded product of high expansion ratio can be obtained. Further, when the pressure of the supplied resin is 100 MPa or lower, it is not likely to have gas leakage in the molding apparatus, and thus a special, expensive facility for preventing gas leakage is not required, which is preferable in view of safety, stable productivity, and molding costs.

When the amount of added carbon dioxide as described above is a suitable amount, and the ultra-high-molecular-weight polyethylene composition is in a completely molten state, it does not backflow to the hopper because of the melt seal of the melted resin itself. The ultra-high-molecular-weight polyethylene composition having carbon dioxide dissolved and diffused therein is sent to a die 9 which has been set at a temperature suitable for expansion.

In addition, the residence time T for passage from the front end of screw to the die outlet is adjusted to a length of time that can be obtained from the following Equation (3), with the viscosity average molecular weight Mv of the ultra-high-molecular-weight polyethylene used and a coefficient E of 0.5 to 10.

$$T = E \times (Mv \times 10^{-6})^2 \qquad\qquad (3)$$

The residence time taken by the ultra-high-molecular-weight polyethylene to pass from the front end of screw to the die outlet can be adjusted by changing the rotating speed of screw, the barrel temperature, the volume of the resin flow path in the die or the volume of the resin flow path in the adaptor which connects the extruder and the die as the volume of the resin flow path from the front end of screw to the die outlet.

The residence time can be prolonged, as the rotating speed of screw is lowered and the volume from the front end of screw to the die outlet is increased.

Further, the pressure of resin at the front end of screw 10 is adjusted to be in the range of from 10 to 100 MPa. The pressure of resin at the front end of screw can be adjusted by changing the output rate, the resin temperature, or the length of the resin flow path from the front end of screw to the die outlet. The resin pressure can be increased, as the rotating speed of screw is increased, the temperature set for the extruder is lowered, and the length from the front end of screw to the die outlet is lengthened.

The residence time for passage from the front end of screw to the die outlet, and the resin pressure at the front end of screw are preferably adjusted by changing the length or volume of the resin flow path from the front end of screw to the die outlet, in view of stability of the various properties and productivity of the obtainable expanded product.

Also, the temperature at the central part of the resin immediately after discharge from die is controlled by the temperature of the cylinder downstream to the extruder 3 and the die temperature.

In the die, a tube through which a cooling medium 11 is passed is installed around the upper and lower lips so that the vicinity of the lip outlet can be locally cooled. A skin layer is formed as a result of the resin passing through this die lip section that is locally cooled by this cooling medium 11. After discharged from the die, expansion of the resin is initiated by release of the pressure. Here, in order to impart a shape to the expanded product, it is preferred that the product passes through a sizing die 12. Thus extruded expanded ultra-high-molecular-weight polyethylene product 13 is taken up by a winding unit 14 at a constant rate and is cut to a predetermined length to the final product. Regarding the temperatures set at the extruder 3 and the die 9, since they depend on the type and use of the ultra-high-molecular-weight polyethylene and a combination thereof, and also on the apparatus for molding, the temperatures can be appropriately selected.

[Expanded ultra-high-molecular-weight polyethylene product]

The expanded ultra-high-molecular-weight polyethylene product prepared according to the process of the invention can be subjected to expansion molding into a variety of molded articles. For the applicable method of molding, any known molding method can be applied without limitation. For example, mention may be made of expanded sheet molding, expanded inflation molding, expanded net molding, expanded profile extrusion molding, expanded multilayer molding, expanded blow molding, and expanded pipe molding. The shapes of the expanded molded products is not particularly limited and may include the sheet-shape, rail-shape, tube-shape, block-shape, and cylinder-shape. Among these, preferred are the expanded sheet prepared by expanded sheet molding, and shapes such as the rail-shape, tube-shape, block-shape and cylinder-shape prepared by expanded profile extrusion molding.

Among these, in particular, the expanded sheet is preferable, and the width of the expanded sheet is preferably from 30 to 10,000 mm, more preferably from 50 to 5,000 mm, and even more preferably from 50 to 3,000 mm. The thickness of the expanded product is preferably from 0.5 to 100 mm, more preferably from 1 to 80 mm, still more preferably from 5 to 70 mm, more preferably from 10 to 50 mm, and even more preferably from 20 to 50 mm.

The expanded ultra-high-molecular-weight polyethylene product according to the invention has a density of from 0.02 to 0.7 g/cm$^3$, preferably from 0.02 to 0.5 g/cm$^3$, and more preferably from 0.02 to 0.4 g/cm$^3$. When the density of the expanded product is 0.02 g/cm$^3$ or more, the mechanical properties such as impact strength are good. When the density is 0.7 g/cm$^3$ or less, the functions expected from an expanded product such as light weight, thermal insulating property, sound absorption, low dielectric constant, impact absorption, and flexibility can be exhibited sufficiently.

Furthermore, the thickness of the skin layer is preferably from 0.2 to 3 mm, more preferably from 0.5 to 2 mm, and even more preferably from 0.8 to 1.5 mm. With 0.2 mm or more, properties such as abrasion resistance, self-lubrication, impact strength, and chemical resistance good; while with 3 mm or less, the functions expected from an expanded product such as light weight, thermal insulating property, sound absorption, low dielectric constant, impact absorption, and flexibility can be sufficiently exhibited.

In addition, the average cell diameter is preferably from 0.1 to 3,000 $\mu$m, more preferably from 20 to 1,000 $\mu$m, and even more preferably from 50 to 500 $\mu$m. If the average cell diameter is within the aforementioned ranges, the functions expected from an expanded product such as thermal insulating property, sound absorption, low dielectric constant, impact absorption, and flexibility can be exhibited.

Moreover, the proportion of closed cells is preferably from 50 to 100%, more preferably from 65 to 100%, and even more preferably from 80 to 100%. If the proportion of closed cells is within the aforementioned ranges, the functions expected from an expanded product such as thermal insulating property and low dielectric constant can be exhibited.

In regard to the expanded ultra-high-molecular-weight polyethylene product obtainable by the process for preparation of the invention, when the DuPont Impact Test is carried out at low temperatures as an index for brittle fracture, the temperature range for brittle fracture is preferably -100˚C or below, more preferably -130˚C or below, and even more preferably -150˚C or below. When the temperature range where no brittle fracture occurs is within the above-mentioned ranges, it means that the product can be durable under extremely severe conditions such as in liquefied natural gas, liquid nitrogen, liquid hydrogen, liquid oxygen, or liquid helium.

In addition, in the following Equation (1) in which the tensile-impact value at -40˚C (JIS-K7160, notches present on both molded ends) is such that the tensile-impact strength X (kJ/m$^2$) is approximated from the density $\rho$ (g/cm$^3$) of the expanded product, the coefficient A is preferably between 75 and 1,500, more preferably between 100 and 1,000, and even more preferably between 200 and 500.

$$X = A \times \rho \qquad\qquad (1)$$

Furthermore, in the following Equation (4) in which the Izod impact strength at -40˚C (ASTM-D256, molding notches present) is such that the Izod impact strength Z (J/m) is approximated from the density $\rho$ (g/cm$^3$) of the expanded product, the coefficient C is preferably 500 or more, more preferably 1,000 or more, and even more preferably no breakage occurring.
$$Z = C \times \rho \qquad (4)$$

The impact strengths within these ranges are characterized by the high impact properties which cannot be recognized from other types at cryogenic temperatures, among the expanded products made of lightweight polyolefins (a density: 0.02 to 0.7 g/cm$^3$).

Also, in the following Equation (2) in which the tensile strength at -150˚C (JIS-K7113) is such that tensile strength Y (MPa) is approximated from the density $\rho$ (g/cm$^3$) of the expanded product, the coefficient B is preferably between 50 and 1,000, more preferably between 70 and 800, and even more preferably between 100 and 500.
$$Y = B \times \rho \qquad (2)$$

When the tensile strength at -150˚C is within the ranges mentioned above, a product may be obtained with a toughness that may be sufficient for the use as a cryogenic material.

Furthermore, the tensile elongation at -150˚C (JIS-K7113) is preferably from 2 to 30%, more preferably from 2 to 20%, and even more preferably from 2 to 10%. If the tensile elongation at -150˚C is within the aforementioned ranges, a product can be obtained which is sufficiently usable as a cryogenic material.

The above-described expanded ultra-high-molecular-weight polyethylene product of the present invention, which is lightweight while being excellent in the mechanical properties such as brittleness at low temperatures, Izod impact strength, tensile-impact value, tensile-impact strength, and tensile elongation and having better external appearance, with the features of ultra-high-molecular-weight polyethylene such as excellent abrasion resistance, self-lubrication, and chemical resistance, can be obtained by the process for preparation described above. Further, the product can be made lightweight by increasing the expansion ratio, whereas various mechanical properties such as tensile strength and impact properties and the like can be enhanced by decreasing the expansion ratio.

[Heat insulator]

The heat insulator made of the expanded product of the present invention has a thermal conductivity (JIS-A1413) of preferably from 0.01 to 0.35 Kcal/m·hr·˚C, more preferably from 0.05 to 0.35 Kcal/m·hr·˚C, and even more preferably from 0.1 to 0.3 Kcal/m·hr·˚C. If the thermal conductivity is within these ranges, the thermal insulating property that is expected from a cryogenic insulating material can be exhibited. For example, as the expansion ratio is increased, the thermal conductivity can be controlled to be lowered, and thus adjusting the expansion ratio allows control of the thermal conductivity as desired. The heat insulator made of the expanded product of the invention can be preferably used as a heat insulator used for transportation, storage and handling of, for example, liquefied natural gas or liquid hydrogen, especially as a heat for cryogenic use.

[Constituent material for superconductive magnetic resonance imaging system]

The superconductive magnetic resonance imaging system used for examination purpose in hospitals, enables imaging, with high resolution, of blood vessels, the bile duct and the pancreatic duct, which is difficult with the conventional magnetic resonance imaging, and thus the system is employed in many hospitals. In this connection, there is a demand on a material which employs a superconductive magnet, and thus is lightweight and has various excellent properties under cryogenic temperatures. The expanded product of the present invention is lightweight and is excellent in various mechanical properties such as impact strength and toughness under cryogenic temperatures, and thus it can be preferably used as a constituent material for the superconductive magnetic resonance imaging system which is used in liquid helium or liquid nitrogen.

[Lightweight high-performance sliding material]

As a material for sliding purpose, use is made of the fluorine-based resins, engineering plastics, polyurethane, or ultra-high-molecular-weight polyethylene having an excellent friction coefficient and abrasiveness. Among these, ultra-high-molecular-weight polyethylene, which is lightweight with a specific gravity of 1 or less, is being utilized in many applications. The lightweight high-performance sliding material that is made of the expanded product of the present invention is ultra-high-molecular-weight polyethylene having its weight further reduced without impairing the properties such as abrasion resistance, self-lubrication, cryogenic properties, and chemical resistance of high-molecular-weight polyethylene. This further reduction in weight allows reduction of energy consumption at the time of use. In particular, since molded articles and structural members such as linings, chemical pumps, gears, bearings, screws, conveyors, artificial joints, artificial limbs and artificial legs which are subjected to rotation or reciprocation, can be lightweight, the amount of energy consumption can be significantly reduced. Thus, the material is very effective.

[Impact-absorbing high-performance sliding material]

There are applications for sliding materials where the impact-absorbing property is required. Examples may be mentioned such as the CMP pads used in the polishing process for the semiconductor silicon wafer, and the guide shoes used as an element in elevators. Conventionally, in such applications, a sliding material and an impact-absorbing material have been used in combination to obtain a balance between the sliding property and the impact-absorbing property. However, the impact-absorbing high-performance sliding material made of the expanded product of the present invention is an expanded ultra-high-molecular-weight polyethylene product that is excellent in the sliding property, which exhibits both the sliding property and the impact-absorbing property. Thus, this material can be preferably used in the impact-absorbing high-performance sliding materials such as the CMP pads, the guide shoes, or the guide rails.

**EXAMPLES**

Now, the present invention will be explained in more detail by way of Examples, which are not intended to limit the invention in any way. The evaluation of properties as used in the Examples and Comparative Examples was carried out according to the following methods.

1) Viscosity average molecular weight (Mv)

It was measured according to ASTM-D4020.

2) Temperature of the resin surface immediately after discharge from the die

Immediately after discharge from the die, the surface temperature of the expanded ultra-high-molecular-weight polyethylene product at a location between 0 mm and 10 mm was measured by means of a non-contact type radiation thermometer (manufactured by MINOLTA, Inc., HT-10D).

3) Temperature at the central part of resin immediately after discharge from the die

Immediately after discharge from the die, the temperature at the central part of the expanded ultra-high-molecular-weight polyethylene product at a location between 0 mm and 10 mm was measured by means of a thermometer with needle-type sensor, by penetrating the needle-shaped sensor part into the central part of the resin over several times until the temperature is stabilized.

4) Residence time taken by resin to pass from the front end of screw to the die outlet in extruder

The residence time taken by an ultra-high-molecular-weight polyethylene composition having a blowing agent dissolved therein to pass from the front end of screw to the die outlet was calculated from the volume of the resin flow path, the extrusion rate and the melt density which corresponds to the melt resin in the die determined from the PVT relationship of the ultra-high-molecular-weight polyethylene resin.

5) Density

An expanded ultra-high-molecular-weight polyethylene was prepared continuously, and 10 samples were taken therefrom at 30-minute intervals (corresponding to 5 hours of preparation). The density was measured using an electronic densimeter (manufactured by ALFA MIRAGE Co., Ltd.; MD-200S) to give an average value.

6) Thickness of skin layer

An expanded ultra-high-molecular-weight polyethylene product was prepared continuously using a die with a rectangle-shaped outlet of a size of 20 mm in width and 5 mm in thickness, and three samples of 10 cm long were taken therefrom at 5-minute intervals. Then, the cross-sections of the three resin samples cut in the direction perpendicular to the extruded direction were photographed by a Scanning Electron Microscope. For each sample, the thickness of the skin layer at the four sides of the cross-section was measured at two sites from each side, that is, 8 sites in total, and the average value was calculated. Subsequently, the average value for the three samples was determined from the average value obtained for each of the samples, and this was taken as the thickness of the skin layer.

7) Average cell diameter

Three samples were obtained in the same way as in the above (6). Next, for the three samples, the center of the cross-sections of the resin cut in the direction perpendicular to the extruded direction were photographed by a Scanning Electron Microscope, the photographed images were used in the calculation of an equivalent circle diameter on the cells within a radius of 500 $\mu$m at the central part of the sample cross-section. Subsequently, for the three samples, an average equivalent circle diameter was calculated from the diameters of the circular section obtained from each sample, and an average value thereof was taken as the average cell diameter.

8) Proportion of closed cells

According to ASTM-D2856, an air pycnometer (manufactured by Tokyo Science Co., Ltd.; air comparison densimeter Type 1000) was used in measurement.

9) Cell uniformity

The maximum diameter of a circular section of the three samples from which the average cell diameter was calculated, was evaluated as O for the case where the maximum equivalent circle diameter is within the range of twice the average cell diameter, as $\Delta$ for the case where the maximum equivalent circle diameter is in the rage of more than twice and up to four times the average cell diameter, and as x for the case where the maximum equivalent circle diameter is in the range of more than four times the average cell diameter.

10) Extrusion stability

The difference between the density of each of the 10 samples in total that was obtained by sampling at 30-minute intervals in (5) above, and the average density value was evaluated as O for the case of being within 10%, as A for the case of being more than 10% and up to 30%, and as x for the case of being more than 30%.

11) DuPont impact strength

The testing machine used was a DuPont impact tester (manufactured by TOYO SEIKI SEISAKU-SHO, LTD.). Using a hitting center in the chisel form (width 20 mm), a drop-weight of 2 kg in weight was dropped from a height of 250 mm, and the condition of the specimen was observed. The specimen used was cut from the expanded product in a size of 50 mm x 10 mm. This specimen was immersed in liquid nitrogen for 5 hours, and then it was taken out to be used in the above-described drop impact testing. Here, the test was carried out within 3 seconds after the specimen was taken out of the liquid nitrogen.

12) Izod impact strength

According to ASTM-D256, the Izod impact strength test (in the presence of molding notch) was carried out under the atmosphere of -40°C. The measurement was carried out under the conditions that the capacity of the hammer was 3.92 J, and the air shot angle was 149.1°. The specimen used was of a width of 10.16 mm, a notch angle of 45° and a notch end r of 0.25 mm.

13) Tensile-impact value

According to JIS-K7160, the measurement of the tensile-impact value (in the presence of molding notches on both ends) was carried out under the atmosphere of -40°C.

The capacity of the hammer was 7.5 J, and the air shot angle was 149.2˚. The specimen used was of a width of 6.0 mm, a notch angle of 45˚ and a notch end r of 1.0 mm.

14) Tensile strength, tensile elongation

According to JIS-K7113, the tensile strength and the tensile elongation were measured under the atmosphere of -150˚C. The specimen of Type ASTM1 was processed from the expanded product by means of a specimen processing apparatus. Measurement was carried out after 60 minutes of storage at the testing temperature, with the distance between the grippers was 110 mm, and the tensile speed was 5 mm/min.
For the measurement of the tensile elongation, a crosshead movement method was employed.

15) Thermal conductivity of expanded product

The measurement was made according to JIS-A1413.

EXAMPLE 1

For the extruder, a single screw extruder 3 (L/D = 32) with a screw of 50 mm in diameter as shown in Fig. 1 was used. The die used had a rectangle-shaped outlet of 20 mm in width and 5 mm in thickness, and the distance from the front end of screw to the die outlet was 330 mm (the volume from the front end of screw to the die outlet was 78.4 $cm^3$). This die was equipped with tubes at the upper and lower lips, through which water was passed as a cooling medium 11 to enable localized cooling in the vicinity of the lip outlet. An ultra-high-molecular-weight polyethylene composition 1 was obtained by dry blending 100 parts by weight of ultra-high-molecular-weight polyethylene having a viscosity average molecular weight of 1,000,000 (manufactured by MITSUI CHEMICALS, INC.; HI-ZEX MILLION 150M), 0.1 part by weight of calcium stearate (manufactured by SAKAI CHEMICAL INDUSTRY CO., LTD.) and 0.05 part by weight of sodium bicarbonate/citric acid (manufactured by BOEHRINGER INGELHEIM CO., LTD., CF).
The ultra-high-molecular-weight polyethylene composition 1 was introduced from a hopper 2 to an extruder 3. Here, the extruder 3 was operated at a set temperature of 180˚C and a rotating speed of screw of 10 rpm with an output of 3 kg/hr. The residence time to pass from the front end of screw to the die outlet was 1.3 minutes.
Carbon dioxide was taken directly from the liquid phase portion using a syphon-type liquid carbon dioxide cylinder 4. The flow path from the cylinder 4 to the metering pump 6 was cooled using a cooling medium circulator 5 with an aqueous ethylene glycol solution adjusted to -12˚C, so that carbon dioxide could be transferred to the metering pump 6 in the liquid state. By controlling the metering pump 6, the pressure control valve 7 was adjusted to be a discharge pressure of 30 MPa. Carbon dioxide was supplied from the pressure control valve 7 to the extruder 3 which had been heated to 180˚C. The feed rate of carbon dioxide was 1 part by weight per 100 parts by weight of thermoplastic resin composition and the supply pressure was 20 MPa. As such, carbon dioxide was supplied to the extruder 3 at a ratio of 2.0 parts by weight per 100 parts by weight of the molten ultra-high-molecular-weight polyethylene composition, and was dissolved and diffused homogeneously.
The ultra-high-molecular-weight polyethylene composition in which carbon dioxide had been dissolved as discharged from the extruder 3 was sent to a die 9 which was set at 130˚C. Immediately before discharge from the die, since the vicinity of the lip outlet was locally cooled, the temperature of the surface layer was cooled as compared with the temperature of the central part. Thus, the skin layer of the expanded product was formed. After discharge from the die, expansion was initiated by releasing the pressure. The surface temperature and the temperature at the central part were measured immediately after discharge from the die. The surface temperature immediately after discharge from the die was 120˚C, and the temperature at the central part immediately after discharge from the die was 133˚C. After completion of expansion, the morphology of the expanded product was controlled through a sizing die 12, and the product was taken up by a winding unit 14 at a constant rate and cut to obtain a sample. The evaluation results for the expanded product are presented in Table 1.

EXAMPLE 2

The experiment was carried out in the same manner as in Example 1, except that carbon dioxide was supplied to the extruder 3 at a ratio of 2.5 parts by weight to 100 parts by weight of the ultra-high-molecular-weight polyethylene composition, and the surface temperature immediately after discharge from the die and the temperature at the central part immediately after discharge from the die were set to 125˚C and 130˚C, respectively. The evaluation results for the expanded product are presented in Table 1.

EXAMPLE 3

The experiment was carried out in the same manner as in Example 1, except that carbon dioxide was supplied to the extruder 3 at a ratio of 3.6 parts by weight to 100 parts by weight of the ultra-high-molecular-weight polyethylene composition, and the surface temperature immediately after discharge from the die and the temperature at the central part immediately after discharge from the die were set to 123˚C and 125˚C, respectively. The evaluation results for the expanded product are presented in Table 1.

EXAMPLE 4

The experiment was carried out in the same manner as in Example 1, except that carbon dioxide was supplied to the extruder 3 at a ratio of 3.5 parts by weight to 100 parts by weight of the ultra-high-molecular-weight polyethylene composition, and the surface temperature immediately after discharge from the die and the temperature at the central part immediately after discharge from the die were set to 120˚C and 125˚C, respectively. The evaluation results for the expanded product are presented in Table 1.

EXAMPLE 5

The experiment was carried out in the same manner as in Example 1, except that the ultra-high-molecular-weight polyethylene composition 1 was obtained by dry blending 100 parts by weight of ultra-high-molecular-weight polyethylene having a viscosity average molecular weight of 1,000,000 (manufactured by MITSUI CHEMICALS, INC.; HI-ZEX MILLION 150M), 0.2 part by weight of calcium stearate (manufactured by SAKAI CHEMICAL INDUSTRY CO., LTD.) and 0.05 part by weight of sodium bicarbonate/citric acid (manufactured by BOEHRINGER INGELHEIM CO., LTD, CF); carbon dioxide was supplied to the extruder 3 at a ratio of 6.0 parts by weight to 100 parts by weight of the ultra-high-molecular-weight polyethylene composition; and the surface temperature immediately after discharge from the die and the temperature at the central part immediately after discharge from the die were set to 120˚C and 123˚C, respectively. The evaluation results for the expanded product are presented in Table 1.

EXAMPLE 6

The experiment was carried out in the same manner as in Example 5, except that carbon dioxide was supplied to the extruder 3 at a ratio of 0.8 parts by weight to 100 parts by weight of the ultra-high-molecular-weight polyethylene composition, and the surface temperature immediately after discharge from the die and the temperature at the central part immediately after discharge from the die were set to 135˚C and 138˚C, respectively. The evaluation results for the expanded product are presented in Table 1 and Table 3.

EXAMPLE 7

The experiment was carried out in the same manner as in Example 1, except that calcium stearate was not added. The evaluation results for the expanded product are presented in Table 1 and Table 3.

EXAMPLE 8

The experiment was carried out in the same manner as in Example 1, except that sodium bicarbonate/citric acid were not added. The evaluation results for the expanded product are presented in Table 1.

EXAMPLE 9

The experiment was carried out in the same manner as in Example 1, except that a die having a length of 530 mm from the front end of screw to the die outlet and a volume of 143.2 cm$^3$ from the front end of screw to the die outlet was used; ultra-high-molecular-weight polyethylene having a viscosity average molecular weight of 2,000,000 (manufactured by MITSUI CHEMICAL, INC.; HI-ZEX MILLION 240ME) was used; carbon dioxide was supplied to the extruder 3 at a ratio of 1.8 parts by weight to 100 parts by weight of the ultra-high-molecular-weight polyethylene composition; and the surface temperature immediately after discharge from the die and the temperature at the central part immediately after discharge from the die were set to 139˚C and 142˚C, respectively. Here, the residence time to pass from the front end of screw to the die outlet was 2.3 minutes. The evaluation results for the expanded product are presented in Table 1.

EXAMPLE 10

The experiment was carried out in the same manner as in Example 1, except that a die having a length of 530 mm from the front end of screw to the die outlet and a volume of 143.2 cm$^3$ from the front end of screw to the die outlet was used; ultra-high-molecular-weight polyethylene having a viscosity average molecular weight of 2,300,000 (manufactured by MITSUI CHEMICAL, INC.; HI-ZEX MILLION 240M) was used; carbon dioxide was supplied to the extruder 3 at a ratio of 10.0 parts by weight to 100 parts by weight of the ultra-high-molecular-weight polyethylene composition; the surface temperature immediately after discharge from the die and the temperature at the central part immediately after discharge from the die were set to 120˚C and 121˚C, respectively; and the rotating speed of screw was set at 6 rpm. Here, the residence time to pass from the front end of screw to the die outlet was 3.6 minutes. The evaluation results for the expanded product are presented in Table 1.

COMPARATIVE EXAMPLE 1

The experiment was carried out in the same manner as in Example 1, except that without passing water in the vicinity of the lip outlet, carbon dioxide was supplied to the extruder 3 at a ratio of 1.0 part by weight per 100 parts by weight of the ultra-high-molecular-weight polyethylene composition, and the surface temperature immediately after discharge from the die and the temperature at the central part immediately after discharge from the die were set to 170˚C and 170˚C, respectively. The evaluation results for the expanded product are presented in Table 2.

COMPARATIVE EXAMPLE 2

The experiment was carried out in the same manner as in Example 1, except that carbon dioxide was supplied to the extruder 3 at a ratio of 1.0 part by weight per 100 parts by weight of the ultra-high-molecular-weight polyethylene composition, and the surface temperature immediately after discharge from the die and the temperature at the central part immediately after discharge from the die were set to 120˚C and 155˚C, respectively. The evaluation results for the expanded product are presented in Table 2.

COMPARATIVE EXAMPLE 3

The experiment was carried out in the same manner as in Example 1, except that without passing water in the vicinity of the lip outlet, carbon dioxide was supplied to the extruder 3 at a ratio of 0.05 part by weight per 100 parts by weight of the ultra-high-molecular-weight polyethylene composition, and the surface temperature immediately after discharge from the die and the temperature at the central part immediately after discharge from the die were set to 170˚C and 170˚C, respectively. The evaluation results for the expanded product are presented in Table 2.

COMPARATIVE EXAMPLE 4

The experiment was carried out in the same manner as in Example 1, except that carbon dioxide was supplied to the extruder 3 at a ratio of 1.8 part by weight per 100 parts by weight of the ultra-high-molecular-weight polyethylene composition, and the surface temperature immediately after discharge from the die and the temperature at the central part immediately after discharge from the die were set to 55˚C and 138˚C, respectively. The evaluation results for the expanded product are presented in Table 2.

COMPARATIVE EXAMPLE 5

The experiment was carried out in the same manner as in Example 1, except that carbon dioxide was supplied to the extruder 3 at a ratio of 1.8 part by weight per 100 parts by weight of the ultra-high-molecular-weight polyethylene composition, and the surface temperature immediately after discharge from the die and the temperature at the central part immediately after discharge from the die were set to 58˚C and 68˚C, respectively. As a result, because the resin temperature is lowered, in the course of lowering the set temperatures of the extruder and the die, there occurs a rapid increase in the pressure, and the ultra-high-molecular-weight polyethylene composition could not be subjected to extrusion molding without being discharged from the die. The evaluation results for the expanded product are presented in Table 2.

COMPARATIVE EXAMPLE 6

The experiment was carried out in the same manner as in Example 1, except that the rotating speed of screw was set at 30 rpm. Here, the residence time taken to pass from the front end of screw to the die outlet was 0.4 minutes. The evaluation results for the expanded product are presented in Table 2 and Table 3.

COMPARATIVE EXAMPLE 7

The experiment was carried out in the same manner as in Example 9, except that a die having a length of 330 mm from the front end of screw to the die outlet and a volume of 78.4 cm$^3$ from the front end of screw to the die outlet was used. Here, the residence time taken to pass from the front end of screw to the die outlet was 1.3 minutes. The evaluation results for the expanded product are presented in Table 2 and Table 3.

COMPARATIVE EXAMPLE 8

The experiment was carried out in the same manner as in Example 1, except that ultra-high-molecular-weight polyethylene having a viscosity average molecular weight of 2,300,000 (manufactured by MITSUI CHEMICAL, INC.; HI-ZEX MILLION 240M) was used; carbon dioxide was supplied to the extruder 3 at a ratio of 10.0 parts by weight to 100 parts by weight of the ultra-high-molecular-weight polyethylene composition; and the surface temperature immediately after discharge from the die and the temperature at the central part immediately after discharge from the die were set to 120˚C and 152˚C, respectively. Here, the residence time taken to pass from the front end of screw to the die outlet was 1.3 minutes. The evaluation results for the expanded product are presented in Table 2.

COMPARATIVE EXAMPLE 9

The experiment was carried out in the same manner as in Example 9, except that a die having a length of 330 mm from the front end of screw to the die outlet and a volume of 78.4 cm$^3$ from the front end of screw to the die outlet was used, and the rotating speed of screw was set at 10 rpm. Here, the residence time taken to pass from the front end of screw to the die outlet was 1.3 minutes. The evaluation results for the expanded product are presented in Table 2 and Table 3.

COMPARATIVE EXAMPLE 10

An expanded high-density polyethylene product with a density of 0.31 g/cm$^3$ and a skin layer thickness of 0.3 mm was obtained using high-density polyethylene having a viscosity average molecular weight of 200,000 and using an extruder and a T-die. The evaluation results for the expanded product are presented in Table 3.
[Table 1]

| | Example | | | | | | | | | |
|---|---|---|---|---|---|---|---|---|---|---|
| | 1 | 2 | 3 | 4 | 5 | 6 | 7 | B | 9 | 10 |
| Viscosity average molecular weight (x $10^4$) | 100 | 100 | 100 | 100 | 100 | 100 | 100 | 100 | 200 | 230 |
| Amount of calcium stearate added (parts by weight) | 0.1 | 0.1 | 0.1 | 0.1 | 0.2 | 0.2 | 0 | 0.1 | 0.1 | 0.1 |
| Amount of sodium bicarbonate/cit ric acid added (parts by weight) | 0.05 | 0.05 | 0.05 | 0.05 | 0.05 | 0.05 | 0.05 | 0 | 0.05 | 0.05 |
| Length from front end of screw to die outlet (mm) | 330 | 330 | 330 | 330 | 330 | 330 | 330 | 330 | 530 | 530 |
| Amount of carbon dioxide added (parts by weight) | 2.0 | 2.5 | 3.6 | 3.5 | 6.0 | 0.8 | 2.0 | 2.0 | 1.8 | 10.0 |
| Temperature of the resin surface immediately after discharge from die (˚C) . | 120 | 125 | 123 | 120 | 120 | 135 | 120 | 120 | 139 | 120 |
| Temperature at the central part of resin immediately after discharge from die (˚C) | 133 | 130 | 125 | 125 | 123 | 138 | 133 | 133 | 142 | 121 |
| Residence time from front end of screw to die outlet (min) | 1.3 | 1.3 | 1.3 | 1.3 | 1.3 | 1.3 | 1.3 | 1.3 | 2.3 | 3.6 |
| Pressure of resin at front end of screw (MPa) | 29 | 21 | 23 | 25 | 25 | 24 | 30 | 29 | 27 | 31 |
| Density (g/cm$^3$) | 0.24 | 0.15 | 0.06 | 0.09 | 0.07 | 0.33 | 0.24 | 0.27 | 0.33 | 0.06 |
| Thickness of skin layer (mm) | 1-0 | 0.7 | 0.3 | 0.9 | 0.7 | 0.3 | 1.0 | 1.0 | 0.3 | 0.6 |
| Flight marks | absent | absent | absent | absent | absent | absent | absent | absent | absent | absent |
| Average cell diameter ($\mu$m) | 200 | 250 | 300 | 270 | 280 | 170 | 200 | 550 | 190 | 200 |
| Proportion of closed cells (%) | 85 | 75 | 68 | 78 | 71 | 74 | 82 | 70 | 81 | 69 |
| Uniformity of cells | ○ | ○ | ○ | ○ | ○ | ○ | Δ | Δ | ○ | Δ |
| Stable productivity | ○ | ○ | ○ | ○ | ○ | ○ | Δ | ○ | ○ | Δ |

[Table 2]

| | Comparative Example | | | | | | | | |
|---|---|---|---|---|---|---|---|---|---|
| | 1 | 2 | 3 | 4 | 5 | 6 | 7 | 8 | 9 |
| Viscosity average molecular weight ($\times 10^4$) | 100 | 100 | 100 | 100 | 100 | 100 | 200 | 230 | 230 |
| Amount of calcium stearate added (parts by weight) | 0.1 | 0.1 | 0.1 | 0.1 | 0.1 | 0.1 | 0.1 | 0.1 | 0.1 |
| Amount of sodium bicarbonate/citric acid added (parts by weight) | 0.05 | 0.05 | 0.05 | 0.05 | 0.05 | 0.05 | 0.05 | 0.05 | 0.05 |
| Length from front end of screw to die outlet (mm) | 330 | 330 | 330 | 330 | 330 | 330 | 330 | 330 | 330 |
| Amount of carbon dioxide added (parts by weight) | 1.0 | 1.0 | 0.05 | 1.8 | 1.8 | 2.0 | 1.8 | 10.0 | 10.0 |
| Temperature of the resin surface immediately after discharge from die (˚C) | 170 | 120 | 170 | 55 | 58 | 120 | 139 | 120 | 120 |
| Temperature at the central part of resin immediately after discharge from die (˚C) | 170 | 155 | 170 | 1.38 | 68 | 133 | 142 | 152 | 121 |
| Residence time from front end of screw to die outlet (min) | 1.3 | 1.3 | 1.3 | 1.3 | | 0.4 | 1.3 | 1.3 | 1.3 |
| Pressure of resin at front end of screw (MPa) | 10 | 20 | 18 | 30 | | 30 | 26 | 20 | 32 |
| Density (g/cm$^3$) | 0.85 | 0.90 | 0.88 | 0.75 | | 0.29 | 0.37 | | 0.08 |
| Thickness of skin layer (mm) | 0.1 | 0.8 | 3.2 | 4.5 | *1 | *2 | *2 | | *2 |
| Flight marks | absent | absent | absent | absent | | present | present | | present |
| Average cell diameter ($\mu$m) | 120 | 110 | 120 | 130 | | 700 | 800 | *3 | 200 |
| Proportion of closed cells (%) | 41 | 94 | 95 | 93 | | 31 | 27 | | 12 |
| Uniformity of cells | ○ | ○ | ○ | ○ | | × | × | | × |
| Stable productivity | ○ | ○ | ○ | ○ | | × | × | | × |

*1: Extrusion molding impossible due to pressure elevation.
*2: No skin layer present on the flight mark areas.
*3: Intermittent occurrence of gas bolowing-off. Extrusion impossible.

[Table 3]

| | Example | | Comparative Example | | | |
|---|---|---|---|---|---|---|
| | 6 | 7 | 6 | 7 | 9 | 10 |
| Raw material | Ultra-high-molecular-weight polyethylene | | | | | High-density polyethylene |
| Viscosity average molecular weight ($\times 10^4$) | 100 | 200 | 100 | 200 | 230 | 20 |
| DuPont impact strength (-196˚C) | No fracture | No fracture | *4 | *4 | *4 | Fracture |
| Density (g/cm$^3$ | 0.33 | 0.24 | 0.29 | 0.37 | 0.08 | 0.31 |
| Thickness of skin layer (mm) | 0. 3 | 1.0 | *2 | *2 | *2 | 0.3 |
| Izod impact strength (-40˚C) (J/m) | 231 | No fracture | 21 | 22 | 5 | 29 |
| Tensile-impact strength (-40˚C) (kJ/m$^2$) | 29.1 | 96.9 | 8.8 | 9.2 | 4.1 | 14.3 |
| Tensile strength (-150˚C)(MPa) | 25.2 | 33.1 | 2.2 | 3.2 | 0.8 | 16.8 |
| Tensile elongation (-150˚C)/8) | 3.3 | 3.9 | 1.1 | 1.1 | 1.0 | 1.4 |
| Thermal conductivity of expanded product (Kcal/m·hr·˚C) | 0.15 | 0.15 | 0.13 | 0.17 | 0.04 | 0.17 |

*2: No skin layer present on the flight mark areas.
*4: Fracture at the flight mark areas.

## Industrial Applicability

The expanded product obtained from the present invention can be preferably used in various applications such as construction, medical care, foodstuff, energy, sports, and leisure. For example, mention may be made of cryogenic thermal insulating materials, precision polishing materials, lightweight high-performance sliding materials, impact-absorbing high-performance sliding materials, high strength impact-absorbing materials, and artificial bone materials, which exhibit the functions of ultra-high-molecular-weight polyethylene and the expanded products. Among these, the cryogenic materials may be exemplified by the constituent materials for thermal insulators used in transportation, storage and handling of liquefied natural gas or liquid hydrogen; the constituent materials for linear motorcars ; the constituent materials for cryogenic storage vessels for storing body fluids or cells such as blood components, spinal fluid, or sperm , or for superconductive magnetic resonance imaging systems; constituent material for thermal insulators used in rockets or space shuttle systems ; and the constituent materials for ultra-high-density memories. In addition to these, mention may be made of linings, guide shoes, elevator shoes, worm screws, guide rails, roller guides, tapper levers, suction, box covers, nozzles, gears, cocks, doctor knives, upholstery for bucket of excavator, elements for snowplow, valves, gaskets, packing, stern tubes, rollers, elements for snowmobile such as soles, parts for a go-cart, ski inner linings, knee pads, battery separators, artificial limbs, artificial legs, artificial bone materials, artificial joints, parts for a medical equipment, run-flat tires, neutron masks, CMP pads, impact absorbers for a shipping glass, impact absorbers for shipping liquid crystal glass, tire materials, insulating plates, noise-absorbing materials, lightweight fillings, and materials for sculpture.

Reference Numerals

1:     ULTRA-HIGH-MOLECULAR-WEIGHT POLYETHYLENE COMPOSITION
2:     HOPPER
3:     EXTRUDER
4:     LIQUID CARBON DIOXIDE CYLINDER
5:     COOLING MEDIUM CIRCULATOR
6:     METERING PUMP

7:    PRESSURE CONTROL VALVE
8:    RESIN PRESSURE GAUGE (CARBON DIOXIDE SUPPLYING SECTION)
9:    DIE
10:   RESIN PRESSURE GAUGE (FRONT END OF SCREW)
11:   COOLING MEDIUM
12:   SIZING DIE
13:   EXPANDED ULTRA-HIGH-MOLECULAR-WEIGHT POLYETHYLENE PRODUCT
14:   WINDING UNIT

**Claims**

1.  An expanded ultra-high-molecular-weight polyethylene product, which is obtainable by expanding ultra-high-molecular-weight polyethylene having a viscosity average molecular weight of from 300,000 to 10,000,000, **characterized in that** the density of the expanded product is from 0.02 to 0.7 g/cm$^3$, and the value of the tensile-impact strength X (kJ/m$^2$) at a temperature of -40°C is represented by the following Equation (1) which is approximated from the density ρ (g/cm$^3$)of the expanded ultra-high-molecular-weight polyethylene product:

$$X = A \times \rho \qquad\qquad (1)$$

wherein the coefficient A is between 75 and 1,500 inclusive.

2.  The expanded ultra-high-molecular-weight polyethylene product according to claim 1, **characterized in that** the tensile strength Y (MPa) of the expanded ultra-high-molecular-weight polyethylene product at a temperature of -150°C is represented by the following Equation (2) which is approximated from the density ρ (g/cm$^3$) of the expanded ultra-high-molecular-weight polyethylene product:

$$Y = B \times \rho \qquad\qquad (2)$$

wherein the coefficient B is between 50 and 1,000 inclusive.

3.  A process for the preparation of an expanded ultra-high-molecular-weight polyethylene product having a density of from 0.02 to 0.7 g/cm$^3$, which process comprises expanding ultra-high-molecular-weight polyethylene having a viscosity average molecular weight of from 300,000 to 10,000,000, **characterized in that** the residence time T (minutes) taken for the ultra-high-molecular-weight polyethylene having a blowing agent dissolved therein to pass from the front end of a screw to the die outlet of an extruder is represented by the following Equation (3) which is approximated from the viscosity average molecular weight Mv of the ultra-high-molecular-weight polyethylene:

$$T = E \times (Mv \times 10^{-6})^2 \qquad\qquad \cdot(3)$$

wherein the coefficient E is between 0.5 and 10 inclusive, and the resin pressure at the front of a screw is from 10 to 100 MPa.

4.  The process according to claim 3, **characterized in that** the process comprises the steps of melting ultra-high-molecular-weight polyethylene in an extruder; adding a blowing agent to the ultra-high-molecular-weight polyethylene; and expanding the resin by extrusion such that the temperature at the resin surface immediately after discharge from the die is from 60 to 140°C, and the temperature at the central part of the resin immediately after discharge from the die is from 70 to 150°C.

5.  The process according to claim 3 or 4, **characterized in that** carbon dioxide is added as the blowing agent in an amount of from 0.1 to 20 parts by weight per 100 parts by weight of the ultra-high-molecular-weight polyethylene.

6. A heat insulator made of the expanded ultra-high-molecular-weight polyethylene product according to claim 1 or 2, which has a thermal conductivity of from 0.01 to 0.35 Kcal/m·hr·˚C.

7. A heat insulator for liquefied natural gas made of the expanded ultra-high-molecular-weight polyethylene product according to claim 1 or 2, which has a thermal conductivity of from 0.01 to 0.35 Kcal/m·hr·˚C.

8. A heat insulator for liquid hydrogen made of the expanded ultra-high-molecular-weight polyethylene product according to claim 1 or 2, which has a thermal conductivity of from 0.01 to 0.35 Kcal/m·hr·˚C.

9. A constituent material for a superconductive magnetic resonance imaging system, which is the expanded ultra-high-molecular-weight polyethylene product according to claim 1 or 2.

10. A lightweight high-performance sliding material, which is the expanded ultra-high-molecular-weight polyethylene product according to claim 1 or 2.

11. An impact-absorbing high-performance sliding material, which is the expanded ultra-high-molecular-weight polyethylene product according to claim 1 or 2.

**Patentansprüche**

1. Expandiertes Polyethylenprodukt mit ultrahohem Molekulargewicht, erhältlich durch Expandierung von Polyethylen mit ultrahohem Molekulargewicht mit einem viskositätsmittleren Molekulargewicht von 300.000 bis 10.000.000, **dadurch gekennzeichnet, dass** die Dichte des expandierten Produkts 0,02 bis 0,7 g/cm$^3$ beträgt und der Wert der Kerbschlagzugzähigkeit X (kJ/m$^2$), der aus der Dichte $\rho$ (g/cm$^3$) des expandierten Polyethylenprodukts mit ultrahohem Molekulargewicht approximiert wird, bei einer Temperatur von -40˚C durch die folgende Gleichung (1) dargestellt wird:

$$X = A \times \rho \qquad\qquad (1)$$

wobei der Koeffizient A zwischen 75 und 1.500 inklusive liegt.

2. Expandiertes Polyethylenprodukt mit ultrahohem Molekulargewicht gemäß Anspruch 1, **dadurch gekennzeichnet, dass** die Zugfestigkeit Y (MPa) des expandierten Polyethylenprodukts mit ultrahohem Molekulargewicht, die aus der Dichte $\rho$ (g/cm$^3$) des expandierten Polyethylenprodukts mit ultrahohem Molekulargewicht approximiert wird, bei einer Temperatur von -150˚C durch die folgende Gleichung (2) dargestellt wird:

$$Y = B \times \rho \qquad\qquad (2)$$

wobei der Koeffizient B zwischen 50 und 1.000 inklusive liegt.

3. Verfahren zur Herstellung von expandiertem Polyethylenprodukt mit ultrahohem Molekulargewicht mit einer Dichte von 0,02 bis 0,7 g/cm$^3$, wobei das Verfahren das Expandieren von Polyethylen mit ultrahohem Molekulargewicht mit einem viskositätsmittleren Molekulargewicht von 300.000 bis 10.000.000 umfasst, **dadurch gekennzeichnet, dass** die Verweilzeit T (Minuten) genommen für das Polyethylen mit ultrahohem Molekulargewicht, das ein darin gelöstes Treibmittel enthält, um von der Vorderseite einer Schnecke zur Auslassdüse eines Extruders zu gelangen, durch die folgende Gleichung (3) dargestellt wird, die aus dem viskositätsmittleren Molekulargewicht Mv des Polyethylens mit ultrahohem Molekulargewicht approximiert wird:

$$T = E \times (Mv \times 10^{-6})^2 \qquad\qquad (3)$$

wobei der Koeffizient E zwischen 0,5 und 10 inklusive liegt, und der Spritzdruck an der Frontseite einer Schnecke bei 10 bis 100 MPa liegt.

4. Verfahren gemäß Anspruch 3, **dadurch gekennzeichnet, dass** es die Schritte umfasst: Schmelzen von Polyethylen mit ultrahohem Molekulargewicht in einem Extruder; Zugeben eines Treibmittels zu dem Polyethylen mit ultrahohem Molekulargewicht und Expandieren des Harzes durch Extrusion, so dass die Temperatur auf der Harzoberfläche sofort nach Auslass aus der Düse bei 60 bis 140 ˚C liegt, und die Temperatur im Zentrum des Harzes sofort nach Auslass aus der Düse bei 70 bis 150 ˚C liegt.

5. Verfahren gemäß Anspruch 3 oder 4, **dadurch gekennzeichnet, dass** Kohlenstoffdioxid als Treibmittel in einer Menge von 0,1 bis 20 Gewichtsanteile pro 100 Gewichtsanteile Polyethylen mit ultrahohem Molekulargewicht zugegeben wird.

6. Wärmeisolator, hergestellt aus dem expandiertem Polyethylenprodukt mit ultrahohem Molekulargewicht gemäß Anspruch 1 oder 2, mit einer thermischen Leitfähigkeit von 0,01 bis 0,35 Kcal/m·hr·˚C.

7. Wärmeisolator für verflüssigtes Erdgas, hergestellt aus expandiertem Polyethylenprodukt mit ultrahohem Molekulargewicht gemäß Anspruch 1 oder 2, mit einer thermischen Leitfähigkeit von 0,01 bis 0,35 Kcai/m·hr·˚C.

8. Wärmeisolator für flüssigen Wasserstoff, hergestellt aus expandiertem Polyethylenprodukt mit ultrahohem Molekulargewicht gemäß Anspruch 1 oder 2, mit einer thermischen Leitfähigkeit von 0,01 bis 0,35 Kcal/m·hr·˚C.

9. Grundmaterial aus expandiertem Polyethylenprodukt mit ultrahohem Molekulargewicht gemäß Anspruch 1 oder 2 für ein supraleitendes Magnetresonanzabbildungssystem.

10. Leichtgewichtiges Hochleistungsgleitmaterial aus expandiertem Polyethylenprodukt mit ultrahohem Molekulargewicht gemäß Anspruch 1 oder 2.

11. Stoßdämpfendes Hochleistungsgleitmaterial aus expandiertem Polyethylenprodukt mit ultrahohem Molekulargewicht gemäß Anspruch 1 oder 2.

**Revendications**

1. Produit expansé à base de polyéthylène de masse moléculaire très élevée, qu'il est possible d'obtenir en réalisant l'expansion d'un polyéthylène de masse moléculaire très élevée ayant une masse moléculaire moyenne en viscosité de 300 000 à 10 000 000, **caractérisé en ce que** la masse volumique du produit expansé vaut de 0,02 à 0,7 g/cm$^3$, et la valeur de la résistance au choc-traction X (kJ/m$^2$) à une température de -40˚C est représentée par l'équation (1) suivante, qui fournit une approximation à partir de la masse volumique p (g/cm$^3$) du produit expansé à base de polyéthylène de masse moléculaire très élevée :

$$X = A \times \rho \qquad (1)$$

le coefficient A étant compris dans l'intervalle allant de 75 à 1500, bornes comprises.

2. Produit expansé à base de polyéthylène de masse moléculaire très élevée selon la revendication 1, **caractérisé en ce que** la résistance à la rupture en traction Y (MPa) du produit expansé à base de polyéthylène de masse moléculaire très élevée, à une température de -150˚C, est représentée par l'équation (2) suivante, qui fournit une approximation à partir de la masse volumique p (g/cm$^3$) du produit expansé à base de polyéthylène de masse moléculaire très élevée :

$$Y = B \times \rho \qquad (2)$$

le coefficient B étant compris dans l'intervalle allant de 50 à 1000, bornes comprises.

3. Procédé de préparation d'un produit expansé à base de polyéthylène de masse moléculaire très élevée dont la masse volumique vaut de 0,02 à 0,7 g/cm$^3$, lequel procédé comprend le fait de réaliser l'expansion d'un polyéthylène de masse moléculaire très élevée ayant une masse moléculaire moyenne en viscosité de 300 000 à 10 000 000, **caractérisé en ce que** le temps de séjour T (minutes), durant lequel le polyéthylène de masse moléculaire très élevée contenant un agent d'expansion à l'état dissous passe de l'extrémité avant de la vis à la sortie de filière d'une extrudeuse, est représenté par l'équation (3) suivante, qui fournit une approximation à partir de la masse moléculaire moyenne en viscosité Mv du polyéthylène de masse moléculaire très élevée :

$$T = E \times (Mv \times 10^{-6})^2 \qquad\qquad (3)$$

le coefficient E étant compris dans l'intervalle allant de 0,5 à 10, bornes comprises, et la pression de la résine à l'avant de la vis valant de 10 à 100 MPa.

4. Procédé selon la revendication 3, **caractérisé en ce qu'**il comprend les étapes consistant à faire fondre un polyéthylène de masse moléculaire très élevée dans une extrudeuse, ajouter un agent d'expansion à ce polyéthylène de masse moléculaire très élevée, et réaliser l'expansion de la résine par extrusion, de telle sorte que la température à la surface de la résine, immédiatement après sa sortie de la filière, vaille de 60 à 140°C, et la température de la partie centrale de la résine, immédiatement après sa sortie de la filière, vaille de 70 à 150°C.

5. Procédé selon la revendication 3 ou 4, **caractérisé en ce que** l'on introduit du dioxyde de carbone en tant qu'agent d'expansion, en une proportion de 0,1 à 20 parties en poids pour 100 parties en poids du polyéthylène de masse moléculaire très élevée.

6. Calorifuge constitué par le produit expansé à base de polyéthylène de masse moléculaire très élevée selon la revendication 1 ou 2, qui présente une conductivité thermique de 0,01 à 0,35 kcal/m.h.°C.

7. Calorifuge pour gaz naturel liquéfié, constitué par le produit expansé à base de polyéthylène de masse moléculaire très élevée selon la revendication 1 ou 2, qui présente une conductivité thermique de 0,01 à 0,35 kcal/m.h.°C.

8. Calorifuge pour hydrogène liquide, constitué par le produit expansé à base de polyéthylène de masse moléculaire très élevée selon la revendication 1 ou 2, qui présente une conductivité thermique de 0,01 à 0,35 kcal/m.h.°C.

9. Matériau constitutif pour système d'imagerie par résonance magnétique à supraconducteur, qui est le produit expansé à base de polyéthylène de masse moléculaire très élevée selon la revendication 1 ou 2.

10. Matériau glissant à hautes performances et de poids réduit, qui est le produit expansé à base de polyéthylène de masse moléculaire très élevée selon la revendication 1 ou 2.

11. Matériau glissant à hautes performances et absorbant les chocs, qui est le produit expansé à base de polyéthylène de masse moléculaire très élevée selon la revendication 1 ou 2.

Fig. 1

Fig. 2

Fig. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11116721 A
- JP 11335480 A
- JP 2000119453 A
- JP 58083006 A